# EUROPÄISCHE PATENTSCHRIFT

(11) **EP 2 161 826 B1**
(45) Veröffentlichungstag und Bekanntmachung des Hinweises auf die Patenterteilung: **16.03.2011**
(21) Anmeldenummer: 08015870.2
(22) Anmeldetag: 09.09.2008
(51) Int. Cl.: H02P 6/00, B65G 54/02, H02K 41/03

(54) **Transfervorrichtung mit dynamisch veränderbaren Antriebsbereichen**
Transfer device with dynamically changeable driving ranges
Appareil de transfert avec un domaine d'entraînement à changement dynamique

(43) Veröffentlichungstag der Anmeldung: 10.03.2010
(73) Patentinhaber: Siemens Aktiengesellschaft, 80333 München (DE)
(72) Erfinder: Hofrichter, Johann, 92546 Schmidgaden (DE)

(56) Entgegenhaltungen:
- EP-A- 1 845 428
- DE-A1- 10 334 736

## Beschreibung

Die vorliegende Erfindung betrifft eine Transfervorrichtung mit einem Primärteil, mindestens einem ersten oder einem zweiten Sekundärteil, die jeweils mit dem Primärteil zum Zwecke des Antriebs magnetisch gekoppelt sind, und einer Regelungsrichtung zur Regelung eines Antriebs der Sekundärteile. Darüber hinaus betrifft die vorliegende Erfindung ein entsprechendes Verfahren zum magnetischen Antreiben mindestens eines ersten und eines zweiten Sekundärteils mit einem Primärteil.

Eine Transfervorrichtung dient beispielsweise zum Transportieren und präzisen Positionieren von Werkstückträgern mit darauf angeordneten Werkstücken. Eine derartige Transfervorrichtung ist auch als Teil und/oder entlang einer Förderstrecke einsetzbar. Entlang der Förderstrecke können unter anderem ein oder mehrere Bearbeitungsstationen und ein oder mehrere Positioniermodule vorzugsweise mit einem Positionierantrieb durch einen Linearmotor angeordnet sein. Darüber hinaus kann eine Transfervorrichtung aber auch beispielsweise zum Güter- oder Personentransport vorzugsweise bei dezentralen Anordnungen, großen Entfernungen und vernetzten Systemen (Transportsysteme verschiedenster Art) eingesetzt werden.

Die Patentschrift DE 101 50 319 C1 offenbart eine gattungsgemäße Transfervorrichtung für Werkstückträger. Durch die Möglichkeit der Mitbenutzung des an sich für die Erzeugung des linearen Wanderfelds vorhandenen ersten Teils eines Spulensystems des elektromagnetischen Linearantriebs zur Positionserfassung und/oder Rückhaltung des Werkstückträgers bei Übernahme von dem Fördersystem zu dem Positioniermodul, kann auf eine gesonderte Installation eines entsprechenden Messsystems und/oder eine herkömmliche Anhaltevorrichtung verzichtet und somit Einbauraum, Konstruktionsaufbau und Installationsaufwand vermindert werden.

Darüber hinaus ist aus der Druckschrift DE 101 50 318 A1 ein Positioniermodul für Werkstückträger und eine Transfervorrichtung für Werkstückträger bekannt. Um ohne Beeinträchtigung der Genauigkeit die Positionierung eines Werkstückträgers in einem Positioniermodul vereinfachen zu können, ist jeder Werkstückträger mit einem Primärelement oder mit einem Sekundärelement eines Linearantriebs versehen.

Bei den bekannten Transfervorrichtungen beispielsweise mit 3-Phasen-Motoren wird jede Phasengruppe mit einem starr zugeordneten Regler fest verdrahtet. Seriell angeordnete Motoren sind in einem jeweils definierten Antriebs- und Geber-Bereich über einen entsprechend zugeordneten Regler geregelt. Nachteilig an derartigen Systemen ist jedoch, dass jedes Sekundärteil bzw. jeder Werkstückträger einem festen Bereich des Primärteils zugeordnet sein muss, damit es/er gezielt entlang des Primärteils bewegt werden kann. Damit müssen unter Umständen verhältnismäßig große Abstände zwischen den einzelnen Sekundärteilen bzw. Werkstückträgern eingehalten werden. Außerdem werden sämtliche Sekundärteile nach einer fest vorgegebenen Regelungsvorschrift entlang des Primärteils bewegt. Dadurch kann in der Regel nur eine verhältnismäßig geringe Positioniergenauigkeit erzielt werden.

Weiterhin offenbart die Druckschrift DE 103 34 736 A1 einen Linearmotor mit Fortbewegungsregelung. Ein derartiger Linearmotor eignet sich insbesondere für modulare Transporteinrichtungen mit geraden und kurvenförmigen Streckenabschnitten. Ein Sekundärteil weist wenigstens einen Permanentmagneten und eine Signalverarbeitungsvorrichtung mit Bewegungsregler auf, und erzeugt zumindest einen bezüglich der Spulenansteuerung relevanten Sollwert. Der Sollwert wird über eine Sollwertschnittstelle vom Sekundärteil einer bezüglich des Primärteils ortsfesten Spulenansteuerung als für die Kommutierung verwendete Größe zugeführt. Es können somit komplexe und vorbestimmte Bahnen und Bewegungsvorgaben realisiert und insbesondere auch eine Vielzahl von Sekundärteilen synchron gemäß der Vorgaben auch komplexer Prozesse gesteuert werden.

Außerdem zeigt die Druckschrift EP 1 845 428 A3 ein Direktantriebstransportsystem mit mehreren Steuereinheiten. Die Steuereinheiten kontrollieren die Menge des Stromflusses und damit die Höhe der Magnetkräfte des Antriebs. Ein MasterSteuergerät stimmt die beiden Steuergeräte aufeinander ab.

Die Aufgabe der vorliegenden Erfindung besteht somit darin, den Durchsatz einer Transportvorrichtung zu erhöhen und gegebenenfalls auch die Positioniergenauigkeit zu verbessern.

Erfindungsgemäß wird diese Aufgabe gelöst durch eine Transfervorrichtung nach Anspruch 1 mit einem Primärteil, mindestens einem ersten und einem zweiten Sekundärteil, die jeweils mit dem Primärteil zum Zwecke des Antriebs magnetisch gekoppelt sind, und einer Regelungseinrichtung zur Regelung eines Antriebs der Sekundärteile, wobei durch die Regelungseinrichtung der Antrieb des ersten Sekundärteils in einem ersten Bereich des Primärteils gemäß einer ersten Regelungsvorschrift und der Antrieb des zweiten Sekundärteils in einem zweiten Bereich des Primärteils gemäß einer gegenüber der ersten verschiedenen zweiten Regelungsvorschrift regelbar und eine Grenze, die den ersten Bereich von dem zweiten Bereich trennt, durch die Regelungseinrichtung dynamisch veränderbar ist, wodurch der erste Bereich verkürzt und der zweite Bereich entsprechend verlängert wird.

Darüber hinaus wird erfindungsgemäß bereitgestellt ein Verfahren nach Anspruch 9 zum magnetischen Antreiben mindestens eines ersten und eines zweiten Sekundärteils mit einem Primärteil, wobei der Antrieb des ersten Sekundärteils in einem ersten Bereich des Primärteils gemäß einer ersten Regelungsvorschrift und der Antrieb des zweiten Sekundärteils in einem zweiten Bereich des Primärteils gemäß einer gegenüber der ersten verschiedenen zweiten Regelungsvorschrift geregelt wird und eine Grenze, die den ersten Bereich von dem zweiten Bereich trennt, dynamisch verändert wird, wodurch der erste Bereich verkürzt und der zweite Bereich entsprechend verlängert wird.

Durch die dynamische Verschiebung der Grenzen der Antriebsbereiche des Primärteils ist es möglich, mehrere Sekundärteile entlang eines einzigen Primärteils unabhängig voneinander zu bewegen und mit dieser Bewegung auch die jeweiligen Antriebsbereiche des Primärteils zu verschieben. Damit kann der Abstand zwischen zwei Sekundärteilen verkürzt und folglich der Durchsatz der Transfervorrichtung erhöht werden. Prinzipiell kann auch eine Sekundär-Stange (ohne Lücke) gemeinsam bewegt werden (Beispiel: LKW-Züge entlang einer Leitplanke mit LKWs als Sekundärteile, die eingeklinkt bzw. aus der Stange ausgeklinkt werden).

Vorzugsweise ist eine Gebereinrichtung an dem Primärteil befestigt, und durch die Regelungseinrichtung ist die Gebereinrichtung ebenfalls dynamisch in mehrere Geberbereiche unterteilbar, so dass dem ersten Bereich des Primärteils ein erster Geberbereich und dem zweiten Bereich des Primärteils ein zweiter Geberbereich zugeordnet ist. Damit kann auch ein Geberbereich elektronisch der Bewegung eines Sekundärteils folgen. Durch die dynamische Verschiebung der Antriebs- und Geberbereiche eines derartigen Direktmotorsystems kann ein elektronischer Vorschub mit Sekundärteil-Wechsel realisiert werden.

Die Gebereinrichtung kann auf einem magnetischen Prinzip beruhen und absolute Positionsinformation liefern. Dabei ist es günstig, wenn das Sekundärteil bzw. der Werkzeugträger einen Permanentmagneten aufweist, dessen Position von einem primärteilseitigen Sensor absolut erfasst wird. Hierzu kann beispielsweise die Position eines durch den Permanentmagneten beeinflussten Sensorstücks durch Laufzeitmessung ermittelt werden. Hierdurch lässt sich ein einfaches und unempfindliches Sensorsystem realisieren.

Besonders vorteilhaft kann das erste Sekundärteil gleichzeitig mit dem zweiten Sekundärteil bewegt werden. Insbesondere lassen sich die beiden Sekundärteile durch das Primärteil synchron bewegen. Da sich so zwei und mehr Sekundärteile gleichzeitig in eine Richtung bewegen lassen, kann der Abstand zwischen zwei Sekundärteilen für den Transport bzw. die Bearbeitung verringert werden. Die Rückbewegung der Antriebsbereiche erfolgt vollständig ohne mechanische Bewegung, wobei einem Sekundärteil lediglich ein neuer Antriebsbereich des Primärteils zugeordnet wird. Dabei erfolgt eine Synchronisierung zwischen den Reglern bzw. Regelbereichen. Somit entspricht der Bewegungsablauf bei der erfindungsgemäßen Transfervorrichtung einem Schneckenvorschub, einem Zahnriemen- oder Ketten-Vorschub ohne Rückhub bzw. einem Takt-Vorschub mit Rückhub. Bei der dynamischen Verschiebung der Antriebs- und Geberbereiche bedarf es lediglich einer elektronischen Umschaltung von Primärelementen (Spulengruppen) der an sich starren Verdrahtungs-Bereiche.

Die Grenze zwischen zwei Bereichen des Primärteils kann unmittelbar mit einer Bewegung des ersten und/oder zweiten Sekundärteils mitbewegt werden. Dadurch verbleibt zwischen zwei Sekundärteilen nur ein geringer ungenutzter Bereich des Primärteils.

Darüber hinaus kann jedes Sekundärteil in seinem Bereich des Primärteils mit einem jeweils individuellen Positions-Offset bezogen auf eine vorgegebene Position bewegbar sein. Dieser Positions-Offset bezieht sich beispielsweise auf einen speziellen Werkstückträger bzw. ein spezielles Werkstück auf einem Werkstückträger. Der Offset wird dann während der gesamten Bewegung des Sekundärteils bzw. Werkstückträgers in dem jeweils zugeordneten Bereich des Primärteils mitgeführt bzw. mitberücksichtigt. Damit lassen sich die Werkstücke über dem gesamten Transportbereich präziser positionieren.

Ferner kann der erste Bereich des Primärteils durch die Regelungseinrichtung dem zweiten Sekundärteil zu dessen Antrieb zuordenbar sein, sobald das erste Sekundärteil das Primärteil verlassen hat. Damit lässt sich die Bewegung der Sekundärteile in einem bestimmten Bereich des Primärteils immer auf die gleiche Art und Weise regeln. Gegebenenfalls sind dabei Offsetwerte an die entsprechenden Bereiche weiterzugeben.

Die vorliegende Erfindung wird nun anhand der beigefügten Zeichnungen näher erläutert, in denen zeigen:
- FIG 1: eine Prinzipskizze einer erfindungsgemäßen Transfer- vorrichtung;
- FIG 2: die Transfervorrichtung von FIG 1 mit weitertranspor- tierten Sekundärteilen und
- FIG 3: die Transfervorrichtung von FIG 2 nach erneuter Wei- tertransportierung und Aufnahme eines neuen Sekundär- teils.

Die nachfolgend näher geschilderten Ausführungsbeispiele stellen bevorzugte Ausführungsformen der vorliegenden Erfindung dar.

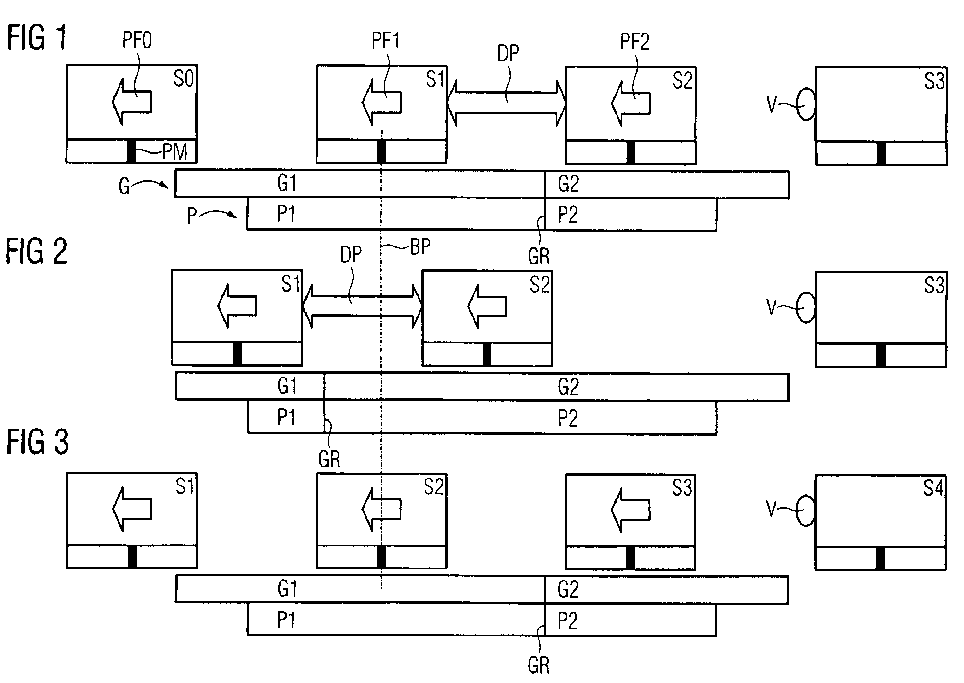

Gemäß dem Beispiel von FIG 1 ist als Transfervorrichtung ein Direktmotorsystem mit einem Primärteil P vorgesehen. Das Primärteil P ist einteilig ausgebildet und besitzt entlang der Transportrichtung (waagrechte Richtung in FIG 1) eine Vielzahl an Spulen und Permanentmagneten. Die Spulen sind beispielsweise für einen 3-Phasen-Motor in Dreiergruppen zusammengefasst. An das Primärteil P ist ein Geber G montiert, dessen Signal zur Regelung der Transportbewegungen dient. Einer oder mehrere Regler steuern die Spulen des Primärteils P dann entsprechend den Signalen des Gebers G an.

Die Transfervorrichtung ist in dem gewählten Beispiel in ein mechanisches Transportsystem integriert. So befindet sich beispielsweise jeweils ein Förderband an den beiden Stirnseiten des Primärteils P bzw. Gebers G. Diese zusätzlichen Transportsysteme sind in den FIG 1 bis 3 nicht eingezeichnet.

Der Transport von Werkstückträgern S0 bis S1 erfolgt hier von rechts nach links. Auf der linken Seite der Transfervorrichtung bzw. des Motorsystems verlässt ein Sekundärteil S0 den Bereich des Gebers G bzw. des Primärteils P, wie dies der Pfeil PF0 andeutet. Auf bzw. an dem Primärteil P befinden sich nun zwei Sekundärteile S1 und S2. Sie werden durch das Primärteil P entsprechend den Pfeilen PF1 und PF2 bewegt. Ein weiteres Sekundärteil S3 befindet sich noch nicht im Einflussbereich des Primärteils P und wird von einem Vorstopper V zurückgehalten.

Im vorliegenden Fall wird die Transfervorrichtung in einer Draufsicht betrachtet, wobei die Sekundärteile S0 bis 53 jeweils eine L-förmige Gestalt besitzen. In der vertikalen Wand jedes Sekundärteils, die dem Primärteil P bzw. Geber G zugewandt ist, ist jeweils ein Permanentmagnet PM angeordnet.

Die einzelnen Werkstücke sollen durch die Werkstückträger bzw. Sekundärteile S0 bis S3 exakt an eine Bearbeitungsposition BP transportiert werden. Diese Bearbeitungsposition ist in den FIG 1 bis 3 durch eine Strichpunktlinie angedeutet. Zur Regelung der Bewegung wirkt der Permanentmagnet jedes Sekundärteils S0 bis S1 mit dem Geber G zusammen. Im vorliegenden Fall liefert der Geber G ein absolutes Positionssignal. In dem gewählten Beispiel befinden sich in dem Antriebsbereich des Primärteils P die beiden Sekundärteile S1 und S2. Um die beiden Sekundärteile S1 und S2 trotz des gemeinsamen Primärteils P getrennt voneinander bewegen zu können, werden sie jeweils von eigenen Reglern bzw. Reglerbereichen angetrieben. Hierzu wird das Primärteil P und der Geber G ebenfalls jeweils in zwei Teile geteilt: P1 und P2 bzw. G1 und G2. Eine gemeinsame Grenze GR, die senkrecht zur Bewegungsrichtung verläuft, trennt den Primärteil P1, dem der Geberbereich G1 zugeordnet ist, von dem Primärteil P2, dem der Geberbereich G2 zugeordnet ist. Die Bereiche P1 und G1 dienen zum Antrieb des Sekundärteils S1 und die Bereiche G2 und P2 dienen zum Antrieb des Sekundärteils S2. Der Abschnitt der Bereiche P2 und G2 hat die Funktion eines Stoppers bzw. eines Einlaufbereichs. Er nimmt das Sekundärteil S2 von dem Förderband auf und bringt es in eine vorbestimmte Position relativ zu einem vorhergehenden Sekundärteil S1 oder relativ zu der Bearbeitungsposition BP, wie dies durch den Doppelpfeil DP angedeutet ist.

Der Antrieb, der durch die Bereiche G1 und P1 realisiert ist, dient zur Bewegung des Sekundärteils S1. Das Sekundärteil S1 wird an die Bearbeitungsposition BP gefahren, verharrt dort für eine bestimmte Zeit und wird dann weitertransportiert. Da die Bereiche G1/P1 bzw. G2/P2 von unterschiedlichen Reglern angesteuert werden, lassen sich die Sekundärteile S1 und S2 unabhängig voneinander bewegen. Der Antrieb mit den Bereichen G1/P1 dient primär der exakten Positionierung eines Werkstücks an der Bearbeitungsposition BP.

Nach der Bearbeitung des Werkstücks wird das Sekundärteil S1 gemäß FIG 2 nach links weiterbefördert. Damit das Sekundärteil S2 nicht warten muss, bis das Sekundärteil S1 die Transfervorrichtung verlassen hat, wird die Grenze GR mit der Bewegung des Sekundärteils S1 nach links verschoben. Dadurch wird der Antriebsbereich P2/G2 verlängert und der Antriebsbereich G1/P1 verkürzt. Damit kann das Sekundärteil S2 dem Sekundärteil S1 in kurzem Abstand (vgl. Doppelpfeil DP) folgen und an die Bearbeitungsposition BP gebracht werden. Der Bereich G2/P2 übernimmt nun die Funktion der Positionierung an der Bearbeitungsposition BP und der Bereich G1/P1 übernimmt die Funktion des Auslaufs auf ein anschließendes Förderband. Auslauf und Positionierung erfolgen gleichzeitig.

FIG 3 zeigt das Sekundärteil S1 in einer ausgelaufenen Position und das Sekundärteil S2 in der Bearbeitungsposition BP. Da das Primärteil des Antriebs zweigeteilt ist, kann in den Einlaufbereich des Primärteils nun das Sekundärteil S3 aufgenommen werden, während das Sekundärteil S2 in der Bearbeitungsposition BP verharrt. Dazu muss die Grenze GR zwischen den Antriebsbereichen dynamisch neu gesetzt werden. Hierzu bestehen prinzipiell zwei Möglichkeiten: Entweder wird dem Sekundärteil S2 der dynamisch veränderte Bereich G1/P1 zugeordnet und dem Sekundärteil S3 der Bereich G2/P2, oder aber der Bereich G2/P2 bleibt dem Sekundärteil S2 zugeordnet und dem Sekundärteil S3 wird der Bereich G1/P1 zugeordnet. Im letzteren Fall liegt dann der Bereich G1/P1 rechts vom Bereich G2/P2. Die jeweilige Zuordnung ist letztlich nur eine Frage der Logik.

Die Positionen der Sekundärteile in FIG 3 entsprechen im Wesentlichen denen von FIG 1. Jedes einzelne Sekundärteil ist jedoch um eine Position nach links gerückt. An dem Vorstopper V liegt damit ein neues Sekundärteil S4 an, während das Sekundärteil S3, das zwischenzeitlich von dem Vorstopper V freigegeben wurde, nun in der Stopper-Vorposition im rechten Teil des Antriebs liegt. Das Sekundärteil S2 liegt im Positionierungsbereich und das Sekundärteil S1 befindet sich, wie erwähnt, im Auslauf.

Erfindungsgemäß wird somit eine Phasen-Bereichs-Verdrahtung eines zweiten Motors zu einem definierten Zeitpunkt einem ersten Regler zugeschaltet, der zuvor einen ersten Motor regelt. Durch diese dynamische Verschiebung der Antriebs- bzw. Regelbereiche kann eine Synchronisierung der Sekundärteile erreicht werden. Somit wird ein synchrones Bewegen von zwei Sekundärelementen in annähernd gleichem Abstand möglich. Auf diese Weise wird eine so genannte "mechanische Kurve" (z.B. Schnecken- oder Rechenantrieb) zur gleichzeitigen Bewegung zweier Sekundärelemente durch eine "elektronische Kurve" nachgebildet.

Nach der synchronen Bewegung werden die Grenzen der Antriebs- und Geber-Bereiche wieder dynamisch neu gesetzt, so dass eine neue Synchronisierung mit einem nachfolgenden Sekundärteil quasi "fliegend" erfolgen kann.

In vorteilhafter Weise kann durch das vorgestellte System die Positionier- und Wiederholgenauigkeit gegenüber bekannten Systemen ohne weiteres um den Faktor 10 verbessert werden. Ein weiterer Vorteil dieses exakten Positionierungssystems ist, dass Störungen leichter behoben werden können, da die Werkstückträger anders als bei der mechanischen Beförderung durch einen Kamm bzw. Rechen frei zugänglich sind und aus dem System entnommen werden können.

Ein weiterer Vorteil gegenüber rein mechanischen Bewegungsformen liegt in dem kürzeren Zyklus, da keine festen Abstände bzw. starren Synchronisationspositionen notwendig sind. Ebenso kann beispielsweise gegenüber elektronischen Schneckenvorschüben eine höhere Dynamik und Genauigkeit erzielt werden, indem eine Offset-Verrechnung bei mechanischen FertigungsUngenauigkeiten durchgeführt wird. Etwaige Positions-Offsets lassen sich nämlich ohne weiteres von einem ersten Regelungsbereich in einen zweiten Regelungsbereich weiterreichen, so dass die Abstände bzw. Bewegungen der einzelnen Sekundärteile während des gesamten Durchlaufs der Transfervorrichtung individuell offset-abhängig durchgeführt werden können.

Da bei bislang bekannten Lösungen nicht gleichzeitig zwei Sekundär-Elemente in einem Motorbereich geregelt werden können, musste bei einem Gesamtzyklus stets eine Leerfahrt berücksichtigt werden. Dies bedeutet, dass ein Werkzeugträger erst aus dem Positionierbereich befördert werden muss, bevor ein neuer Werkzeugträger in den Positionierbereich aufgenommen werden kann. Derartige "Leerfahrten" sind mit der vorgestellten Lösung nicht mehr notwendig, da durch die dynamische Verschiebung der Regelbereiche eine Synchronisation der Bewegung zweier Werkstückträger möglich wird. Dies bedeutet auch, dass gleichzeitig mit dem Positionieren ein Wechsel der Werkzeugträger bzw. Sekundärelemente möglich ist.

Die vorhergehenden Beispiele beziehen sich auf den Transport zweier Werkstückträger mit Hilfe eines einzigen Primärteils durch dynamisches Verschieben der Regelbereiche. Das Primärteil kann aber auch in mehr als zwei Antriebsbereiche unterteilt werden, so dass mehr als zwei Werkstückträger in kurzem Abstand unabhängig voneinander bzw. synchronisiert miteinander bewegt werden können. Weiterhin ist dieses Transportsystem auch zum Güter- und Personentransport einsetzbar.

## Patentansprüche

1. Transfervorrichtung mit
- einem Primärteil (P),
- mindestens einem ersten und einem zweiten Sekundärteil (S1,S2), die jeweils mit dem Primärteil (P) zum Zwecke des Antriebs magnetisch gekoppelt sind, und
- einer Regelungseinrichtung zur Regelung eines Antriebs der Sekundärteile,
**dadurch gekennzeichnet, dass**
- durch die Regelungseinrichtung der Antrieb des ersten Sekundärteils (S1) in einem ersten Bereich (P1) des Primärteils (P) gemäß einer ersten Regelungsvorschrift und der Antrieb des zweiten Sekundärteils (S2) in einem zweiten Bereich (P2) des Primärteils (P) gemäß einer gegenüber der ersten verschiedenen zweiten Regelungsvorschrift geregelt wird und
- eine Grenze (GR), die den ersten Bereich (P1) von dem zweiten Bereich P2) trennt, durch die Regelungseinrichtung dynamisch verändert wird, wodurch der erste Bereich (P1) verkürzt und der zweite Bereich (P2) entsprechend verlängert wird.

2. Transfervorrichtung nach Anspruch 1, wobei eine Gebereinrichtung (G) an dem Primärteil (P) befestigt ist, und durch die Regelungseinrichtung die Gebeinrichtung (G) ebenfalls dynamisch in mehrere Geberbereiche (G₁, G₂) unterteilt wird, so dass dem ersten Bereich (P1) des Primärteils (P) ein erster Geberbereich (G1) und dem zweiten Bereich (G2) des Primärteils (P) ein zweiter Geberbereich (G2) zugeordnet ist.

3. Transfervorrichtung nach Anspruch 2, wobei die Gebereinrichtung (G) auf einem magnetischen Prinzip beruht und absolute Positionsinformation liefert.

4. Transfervorrichtung nach einem der vorhergehenden Ansprüche, wobei das erste Sekundärteil (S1) gleichzeitig mit dem zweiten Sekundärteil (S2) bewegt wird.

5. Transfervorrichtung nach einem der vorhergehenden Ansprüche, wobei die Grenze (GR) mit einer Bewegung des ersten und/oder zweiten Sekundärteils (S1, S2) mitbewegt wird.

6. Transfervorrichtung nach einem der vorhergehenden Ansprüche, wobei jedes Sekundärteil (S1,S2) in seinem Bereich (P1, P2) des Primärteils (P) mit einem jeweils individuellen Positionsoffset bezogen auf eine vorgegebene Position bewegt wird.

7. Transfervorrichtung nach einem der vorhergehenden Ansprüche, wobei die beiden Sekundärteile (S1,S2) durch das Primärteil (P) synchron bewegt werden.

8. Transfervorrichtung nach einem der vorhergehenden Ansprüche, wobei der erste Bereich (P1) des Primärteils (P) durch die Regelungseinrichtung dem zweiten Sekundärteil (S2) zu dessen Antrieb zugeordnet wird, sobald das erste Sekundärteil (S1) das Primärteil (P) verlassen hat.

9. Verfahren zum magnetischen Antreiben mindestens eines ersten und eines zweiten Sekundärteils (S1,S2) mit einem Primärteil (P),
**dadurch gekennzeichnet , dass**
- der Antrieb des ersten Sekundärteils (S1) in einem ersten Bereich (P1) des Primärteils (P) gemäß einer ersten Regelungsvorschrift und der Antrieb des zweiten Sekundärteils (S2) in einem zweiten Bereich (P2) des Primärteils (P) gemäß einer gegenüber der ersten verschiedenen zweiten Regelungsvorschrift geregelt wird und
- eine Grenze (GR), die den ersten Bereich (P1) von dem zweiten Bereich (P2) trennt, dynamisch verändert wird, wodurch der erste Bereich (P1) verkürzt und der zweite Bereich (P2) entsprechend verlängert wird.

## Claims

1. Transfer apparatus having
- a primary part (P),
- at least one first and one second secondary part (S1,S2), which are each magnetically coupled to the primary part (P) for drive purposes, and
- a regulation device for regulation of a drive of the secondary parts,
**characterized in that**
- the regulation device regulates the drive of the first secondary part (S1) in a first zone (P1) of the primary part (P) in accordance with a first regulation rule, and regulates the drive of the second secondary part (S2) in a second zone (P2) of the primary part (P) in accordance with a second regulation rule, which is not the same as the first, and
- a boundary (GR), which separates the first zone (P1) from the second zone (P2), is varied dynamically by the regulation device, whereby the first zone (P1) is shortened and the second zone (P2) is lengthened accordingly.

2. Transfer apparatus according to Claim 1, wherein a transmitter device (G) is attached to the primary part (P) and, by means of the regulation device, the transmitter device (G) is likewise subdivided dynamically into a plurality of transmitter zones (G1, G2), such that a first transmitter zone (G1) is associated with the first zone (P1) of the primary part (P), and a second transmitter zone (G2) is associated with the second zone (G2) of the primary part (P).

3. Transfer apparatus according to Claim 2, wherein the transmitter device (G) is based on a magnetic principle and supplies absolute position information.

4. Transfer apparatus according to one of the preceding claims, wherein the first secondary part (S1) is moved at the same time as the second secondary part (S2).

5. Transfer apparatus according to one of the preceding claims, wherein the boundary (GR) is also moved with movement of the first and/or second secondary part (S1, S2).

6. Transfer apparatus according to one of the preceding claims, wherein each secondary part (S1,S2) is moved in its zone (P1, P2) of the primary part (P) with a respectively individual position offset with respect to a predetermined position.

7. Transfer apparatus according to one of the preceding claims, wherein the two secondary parts (S1, S2) are moved synchronously by the primary part (P).

8. Transfer apparatus according to one of the preceding claims, wherein the first zone (P1) of the primary part (P) is associated by the regulation device with the second secondary part (S2), in order to drive it, as soon as the first secondary part (S1) has left the primary part (P).

9. Method for magnetic driving of at least one first and one second secondary part (S1, S2) with a primary part (P), **characterized in that**
- the drive of the first secondary part (S1) is regulated in a first zone (P1) of the primary part (P) in accordance with a first regulation rule, and the drive of the second secondary part (S2) is regulated in a second zone (P2) of the primary part (P) in accordance with a second regulation rule, which is not the same as the first, and
- a boundary (GR), which separates the first zone (P1) from the second zone (P2), is varied dynamically, whereby the first zone (P1) is shortened and the second zone (P2) is lengthened accordingly.

## Revendications

1. Installation de transfert, comprenant
- une partie ( P ) primaire,
- au moins une première partie et une deuxième partie secondaires, qui sont couplées magnétiquement respectivement à la partie ( P ) primaire en vue de l'entraînement, et
- un dispositif de régulation pour réguler un entraînement des parties secondaires,
**caractérisée en ce que**
- par le dispositif de régulation, l'entraînement de la première partie ( S1 ) secondaire est régulée dans un premier domaine ( P1 ) de la partie ( P ) primaire suivant une première prescription de régulation et l'entraînement de la deuxième partie ( S2 ) secondaire est régulée dans un deuxième domaine ( P2 ) de la partie ( P ) primaire suivant une deuxième prescription de régulation différente de la première et
- une limite ( GR ), qui sépare le premier domaine ( P1 ) du deuxième domaine ( P2 ), est modifiée dynamiquement par le dispositif de régulation, de sorte que le premier domaine ( P1 ) est raccourci et que le deuxième domaine ( P2 ) est allongé d'une manière correspondante.

2. Installation de transfert suivant la revendication 1, dans laquelle un dispositif ( G ) capteur est fixé à la partie ( P ) primaire et par le dispositif de régulation le dispositif ( G ) capteur est subdivisé également d'une manière dynamique en plusieurs domaines ( G1, G2 ) de capteur, de manière à associer au premier domaine ( P1 ) de la partie ( P ) primaire un premier domaine ( G1 ) de capteur et au deuxième domaine ( G2 ) de la partie ( P ) primaire un deuxième domaine ( G2 ) de capteur.

3. Installation de transfert suivant la revendication 2, dans laquelle le dispositif ( G ) de capteur repose sur un principe magnétique et fournit une information de position absolue.

4. Installation de transfert suivant l'une des revendications précédentes, dans laquelle la première partie ( S1 ) secondaire est déplacée en même temps que la deuxième partie ( S2 ) secondaire.

5. Installation de transfert suivant l'une des revendications précédentes, dans laquelle la limite ( GR ) est déplacée en même temps qu'un déplacement de la première et/ou de la deuxième partie ( S1, S2 ) secondaire.

6. Installation de transfert suivant l'une des revendications précédentes, dans laquelle chaque partie ( S1, S2 ) secondaire est déplacée dans son domaine ( P1, P2 ) de la partie ( P ) primaire avec un décalage individuel de position respectif rapporté à une position prescrite.

7. Installation de transfert suivant l'une des revendications précédentes, dans laquelle les deux parties ( S1, S2 ) secondaires sont déplacées en synchronisme par la partie ( P ) primaire.

8. Installation de transfert suivant l'une des revendications précédentes, dans laquelle le premier domaine ( P1 ) de la partie ( P ) primaire est associé par le dispositif de régulation à la deuxième partie ( S2 ) secondaire pour son entraînement dès que la première partie ( S1 ) secondaire a quitté la partie ( P ) primaire.

9. Procédé d'entraînement magnétique d'au moins une première et une deuxième parties ( S1, S2 ) secondaires par une partie ( P ) primaire,
**caractérisé en ce que**
- on régule l'entraînement de la première partie ( S1 ) secondaire dans un premier domaine ( P1 ) de la partie ( P ) primaire suivant une première prescription de régulation et l'entraînement de la deuxième partie ( S2 ) secondaire dans un deuxième domaine ( P2 ) de la partie ( P ) primaire suivant une deuxième prescription de régulation différente de la première et
- on modifie dynamiquement une limite ( GR ) qui sépare le premier domaine ( P1 ) du deuxième domaine ( P2 ), de sorte que le premier domaine ( P1 ) est raccourci et que le deuxième domaine ( P2 ) est allongé d'une manière correspondante.
